Europäisches Patentamt

European Patent Office

Office européen des brevets

(11) Publication number: **0 429 089 A2**

# EUROPEAN PATENT APPLICATION

(21) Application number: **90122444.4**

(22) Date of filing: **24.11.90**

(51) Int. Cl.5: **G01S 3/782**

(30) Priority: **24.11.89 IT 4859689**

(43) Date of publication of application:
**29.05.91 Bulletin 91/22**

(84) Designated Contracting States:
**AT BE CH DE FR GB LI NL SE**

(71) Applicant: **SELENIA INDUSTRIE ELETTRONICHE ASSOCIATE S.p.A.**
**Via Tiburtina, KM 12.400**
**I-00131 Roma(IT)**

(72) Inventor: **Sparvieri, Nicola**
**Via dei Massimi, 25**
**I-00136 Roma(IT)**
Inventor: **Graziani, Filippo**
**Via Lariana no. 5**
**I-00100 Roma(IT)**

(74) Representative: **Gustorf, Gerhard, Dipl.-Ing.**
**Patentanwalt Dipl.-Ing. Gerhard Gustorf**
**Bachstrasse 6 A**
**W-8300 Landshut(DE)**

(54) Horizon sensor for satellites.

(57) Horizon sensor, essentially constituted by a high critical temperature (Tc circa 90 - 125 K) superconductor (1) preferably in thin film form which changes its resistivity status on passing from higher temperatures, through the critical temperature, to lower temperatures and vice versa, when the external surface of the satellite on which it is placed passes from a zone reached by radiation ( light and/or IR) to a shadow zone due to the satellite's rotation. The finding can be placed in the solid state device section and specifically in that of the sensors. Its best application is in the space sector.

FIG. 1

EP 0 429 089 A2

# HORIZON SENSOR FOR SATELLITES

The invention relates a horizon sensor which uses high critical temperature superconductors preferably in thin film form placed on the outer surface of the satellite. This sensor can detect temperature variations of the satellite's illuminated surface and of the surface in shadow changing its resistivity value, bearing in mind that the temperature difference is of circa 300 K.

The problem solved by the finding is the determination the asset of the satellites with respect to the incident radiations, either to correct unwanted rotations or to monitor the rotation by, for example, placing a number of these sensors along the satellite's whole perimeter. It is constituted by a superconductor which changes its resistivity status in its passage from higher temperatures to lower temperatures with respect to the critical temperature and viceversa, when the external surface of the satellite on which it is placed passes from a zone which is reached by radiation to a shadow zone because of the satellite's rotation.

From the known sensors existing in the current techniques the following can be mentioned.

a) Photodiodes, having a detection spectrum which ranges from 0.4 to 0.7 ,m. These components demonstrate low reliability with respect to the duration of the operations as well as a low resistance to ionizing radiation.

b) Thermopiles, usually constituted by a component (nearly always an array) with conjunctions to thermocouples connected in series, are undoubtedly of simple construction requiring a minimum quantity of electronic material but having a rather long answer time.

c) Pyroelectric detectors which are based on voltage variation of a condensor having a dielectric with a temperature dependent polarization. These have a fast answer but have a low level of sensitivity and can not certainly compete with that of the presented sensor.

The horizon sensor, subject of this request, has the following advantages:

d) The minimum detectable signal is limited uniquely by the thermal fluctuations.

e) The sensitivity is inversely proportional to its thermal capacity.

From this, it can be deduced that said horizon sensor finds interesting applications specially in the space sector. The invention is now described in detail, for sake of illustration and not in a limitative manner, refering to the attached drawings in which:

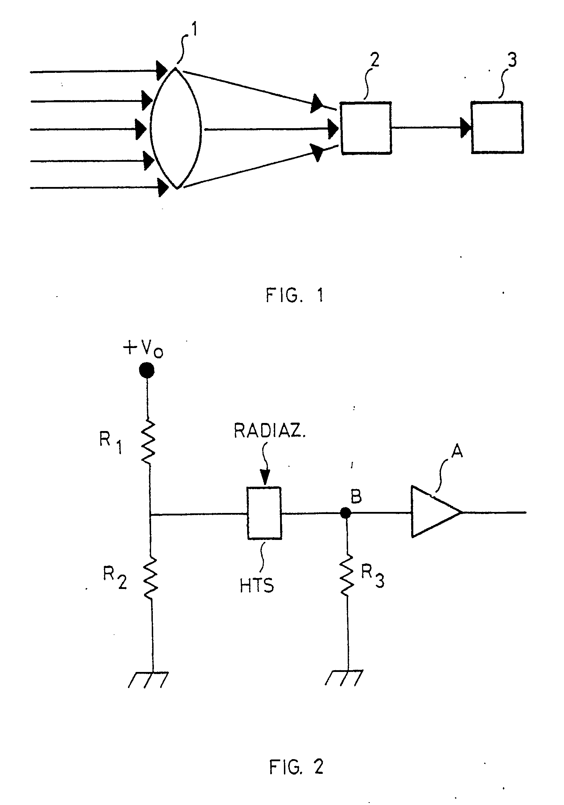

Fig. 1 indicates the general diagram of the horizon sensor where:
1 indicates the optical system;
2 radiation detection, subject of the invention;

and 3 the electronics for signal processing.
Fig. 2 illustrates the general circuit diagram of the radiation detector indicated by 2 in Fig. 1.

It is to be kept in mind that the three resistances R are selected in a way as to obtain the maximum voltage value at point A. Furthermore the diagram also illustrates the power supply voltage Vo; the high temperature semiconductor HTS and the resistance R.

The horizon sensor in question changes its resistance when the temperature changes, the cause of this increase is the absorption of radiation. The sharp fall in the resistance of the superconductor at the critical temperature is therefore the reason for its use as a bolometer.

## Claims

1. A Horizon sensor for satellites, characterized by the fact that it is essentialy constituted by an appropriate optical system (1); a radiation detector (2); an appropriate processor for the processing of the signal.

2. A horizon sensor, as per claim 1, characterized by the fact that said detector is essentially constituted by a superconductor element at high critical temperature in thin film form with current flowing through it,generated by a continuous power voltage, whose value is determined by appropriately valued resistances, where the output current is sent before being processed by an appropriate processor.

3. A horizon sensor for satellites, as per claim 1, characterized by the fact that the superconductor element must be at a high critical temperature.

4. A horizon sensor for satellites, as per preceeding claims, characterized by the fact that said superconductor can be positioned at the inside of a cavity with appropriately chosen dimensions, so as to be protected from external agents and to simultaneously reach the wanted angular resolution as this determines the quantity which strikes the cavity bottom where it is positioned.

5. A horizon sensor for satellites, as per preceeding claims, characterized by the fact that the cavity is protected by a filter which is capable to select the radiations.

FIG. 1

FIG. 2